# EUROPEAN PATENT SPECIFICATION

(11) **EP 2 341 691 B1**
(45) Date of publication and mention of the grant of the patent: **17.04.2013**
(21) Application number: 10196811.3
(22) Date of filing: 23.12.2010
(51) Int. Cl.: H04L 29/08, G06Q 30/02

(54) **Broadcast receiving terminal and system and method for controlling widget**
Rundfunkempfangsendgerät und System und Verfahren zum Steuern eines Widgets
Terminal de réception de diffusion et système et procédé pour le contrôle d'objets

(30) Priority: 31.12.2009 KR 20090135191; 11.02.2010 KR 20100012968
(43) Date of publication of application: 06.07.2011
(73) Proprietor: Alticast Corporation, Seoul 137-858 (KR)
(72) Inventor: Thornborrow, Chris, 60329 Frankfurt am Main (DE); Park, Sunghun, Daejeon Seo-gu (KR)
(74) Representative: van Westenbrugge, Andries

(56) References cited:
- US-A1- 2009 043 659
- US-A1- 2009 172 746
- US-A1- 2009 216 634

## Description

### Field of the Invention

The exemplary embodiments relate to a broadcast receiving terminal, a widget control system and a widget control method and, more particularly, to a system and a method for controlling a widget that is operated in a broadcast receiving terminal by using a broadcast communications network; and a broadcast receiving terminal capable of executing a widget whose operation is controlled by the system and the method.

### Background of the Invention

A widget, which indicates a small-sized application program used for providing a variety of information, has been popular in broadcasting environments as well as computer environments. For example, widgets have been used for providing weather information, displaying the current time, providing a VOD list for a Youtube service, and the like.

Conventionally, by a user, a widget is directly downloaded from a server and installed in a broadcast receiving terminal such as a set-top box. Moreover, the widget may be executed (activated) only by the control (request) of the user even after it is installed in the broadcast receiving terminal. Accordingly, it is difficult for a broadcast service provider (manager) to check whether or not a specific widget is installed in the broadcast receiving terminal and the installed widget is executed (activated) even though it is installed.

It is also a problem that the broadcast service provider is unable to not only allow an advertisement to be displayed on the widget (i.e., push the advertisement into the widget) at a key time but also provide a two-way service to users.

Further, it is close to impossible for the broadcast service provider to arrange the widget at a desired position on a display apparatus connected to the broadcast receiving terminal. Resultantly, the widget does not serve as a constituent part of an integral service provided from the broadcast service provider.

Briefly, the conventional widget is controlled to be operated by a user (other than the broadcast service provider) and, thus, the broadcast service provider or a provider (content provider) of providing contents through the widget is not easy to make any profits through providing the widget.

In US 2009/172746 A1 an apparatus and method to present displayable applications including content retrieved over a data network and augmented content is disclosed.

In US 2009/216634 A1 an apparatus for displaying an advertisement for an advertised widget and, in response of selection of the presented advertisement, receiving and installing the advertised widget is disclosed.

In US 2009/043659 A1 a method for providing personalized advertisements based on advertisement control data matching with the advertisements is disclosed.

### Summary of the Invention

In view of the above, the present embodiments provide a system and a method for enabling a broadcast service provider to control a widget that is operated in a broadcast receiving terminal; and a broadcast receiving terminal that is controlled by the system and the method.

In accordance with an aspect of the present invention, there is provided a widget control system including a widget server configured to transmit to a broadcast receiving terminal through a broadcasting communications network a widget for displaying contents provided from a content provider and/or information related to the contents; and a widget controller configured to transmit to the broadcast receiving terminal through the broadcasting communication network a control signal for controlling an operation of the widget on the broadcast receiving terminal, wherein the control signal comprises at least one of commands of storing, deleting, executing, pausing and stopping the widget.

In this case, the control signal may further include any one of a first display command for controlling the widget to be displayed on a display apparatus connected to the broadcast receiving terminal; and a second display command for controlling a widget not to be displayed on the display apparatus.

In addition, the control signal may further include a position control command for controlling a position where the widget is displayed on a display apparatus, the display apparatus being connected to the broadcast receiving terminal.

Besides, the control signal may further include an identifier including at least one of a name, a version and a priority of the widget.

In accordance with another aspect of the present invention, there is provided a broadcast receiving terminal including a receiver configured to receive from a broadcast service provider through a broadcasting communications network at least one of a widget for guiding contents provided from a content provider and a control signal for controlling an operation of the widget; and a widget engine configured to control the operation of the widget based on the control signal. Here, the control signal comprises at least one of commands of storing, deleting, executing, pausing and stopping the widget.

In accordance with still another aspect of the present invention, there is provided a widget control method including transmitting to a broadcast receiving terminal through a broadcasting communications network a widget for displaying contents provided from a content provider and/or information related to the contents, the widget being displayable on the broadcast receiving terminal; transmitting to the broadcast receiving terminal through the broadcasting communications network a control signal for controlling an operation of the widget on the broadcast receiving terminal; and controlling the operation of the widget on the broadcast receiving terminal based on the control signal received. Here, the control signal comprises at least one of commands of storing, deleting, executing, pausing and stopping the widget.

### Brief Description of the Drawings

The objects and features of the present invention will become apparent from the following description of embodiments, given in conjunction with the accompanying drawings, in which:
Fig. 1 is a block diagram showing a general structure of a digital broadcasting system in accordance with an exemplary embodiment;
Fig. 2 is a block diagram showing a detailed structure of a widget control system and a broadcast receiving terminal in accordance with an exemplary embodiment; and
Fig. 3 is a flowchart showing a general process of a widget control method in accordance with an exemplary embodiment.

### Detailed Description of the Embodiments

Exemplary embodiments of the present invention will now be described in detail with reference to the accompanying drawings which form a part hereof.

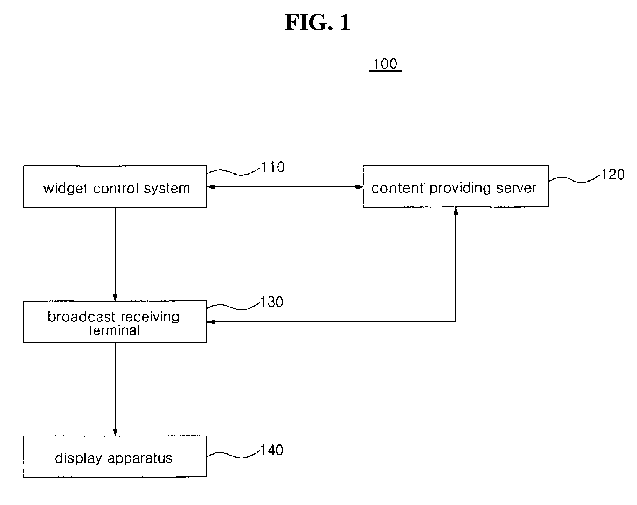

Fig. 1 is a block diagram showing a general structure of a digital broadcasting system 100 in accordance with an exemplary embodiment.

Referring to Fig. 1, the digital broadcasting system 100 of the present embodiment may include a widget control system 110, a content providing server 120, a broadcast receiving terminal 130 and a display apparatus 140, functions of which will be described below per unit.

The widget control system 110, which is a system of a broadcast service provider, may transmit to the broadcast receiving terminal 130 a target widget to be displayed to a user through the display apparatus 140. The widget indicates an application program for displaying contents and/or information related to the contents. The contents and the information may be provided from the content providing server 120 to the broadcast receiving terminal 130, and the widget may be received from the content providing server 120 and stored in the broadcast receiving terminal 130. Meanwhile, the content providing server 120 indicates a server of a content provider, which is independent of the broadcast service provider.

The widget control system 110 may transmit to the broadcast receiving terminal 130 not only a widget but also a control signal including, e.g., a storing command for storing the widget therein. In this case, the broadcast receiving terminal 130 may store the widget received from the widget control system 110 in response to the received control signal.

Conventionally, a widget is stored in the broadcast receiving terminal 130 by using a first method (Pull type) by which any one of at least one widget provided from a widget server is selected and downloaded therein by a user or a second method (Preloaded type) by which it is pre-stored therein during the manufacturing process of the broadcast receiving terminal 130.

However, in accordance with the present embodiment, the broadcast service provider may store in the broadcast receiving terminal 130 a desired widget to be displayed on the display apparatus 140 through the broadcast receiving terminal 130 by pushing the widget through the widget control system 110. In other words, the storage of the widget in the broadcast receiving terminal 130 may be controlled by the broadcast service provider.

In the case of storing a widget in the broadcast receiving terminal 130 through the above process, the widget control system 110 may further transmit to the broadcast receiving terminal 130 through a broadcasting communications network a control signal including, e.g., control commands for executing, pausing and stopping the widget on the broadcast receiving terminal 130. In other words, the broadcast service provider may directly control the operation (execution, pause and stop) of the widget on the broadcast receiving terminal 130 through the widget control system 110.

The display apparatus 140 may display the transmitted widget to the user. If the widget includes information lists related to contents (e.g., video on demand (VOD)) and the user selects one content list from the information list, the broadcast receiving terminal 130 may receive contents corresponding the selected content list from the content providing server 120 through a network such as the Internet network and display it to the user through the display apparatus 140.

Moreover, in the case of deleting a specific one of the widgets stored in the broadcast receiving terminal 130, the widget control system 110 may transmit to the broadcast receiving terminal 130 a control signal including a deleting command for deleting the widget, and the broadcast receiving terminal 130 may delete the widget in response to the received control signal.

For the convenience of description, Fig. 1 shows the broadcast receiving terminal 130 (e.g., a set-top box) and the display apparatus 140 as if they were independent of each other. However, in accordance with another embodiment, the broadcast receiving terminal 130 and the display apparatus 140 may be coupled to each other, serving as one single apparatus (e.g., a digital TV).

In a conventional digital broadcasting environment, a user interface is limited to a remote control and, thus, it is not easy for a user to make a manipulation on the remote control to install, execute, pause and/or delete a target widget in order to search and check specific contents. On the other hand, in case that the broadcast service provider directly controls the operations of the widgets as in the present embodiment, the user may easily receive information related to corresponding contents and/or the contents themselves, thereby improving the user convenience.

Further, in accordance with the present embodiment, it is possible to assure the storage and the execution of the widget in the broadcast receiving terminal 130 (that is, the broadcast service provider may enable the widget to be displayed on the display apparatus 140 at a key time) and, thus, the broadcast service provider may make various tests for advertisements or the like to estimate their effects by using the widgets. Accordingly, the provider may expect profits through providing the widgets.

As described above, in accordance with the present embodiment, the broadcast service provider may directly control the operations of widgets in the broadcast receiving terminal 130 through the widget control system 110. Hereinafter, the widget controlled in the broadcast receiving terminal 130 through the widget control system 110 is referred to as "operator widget (OW)" for the convenience of description.

As described above, in the present embodiment, the storage, execution, pause, stop and deletion of the operator widget may be controlled by the broadcast service provider. However, in accordance with another embodiment, the pause and stop of the operator widget and the operation of changing the visible state of the operator widget to be described below may be controlled by a user as well as the broadcast service provider.

In other words, if the operation of a widget that is not desired by a user is executed by the broadcast service provider, the user may pause or stop the widget; or change the operator widget to an unvisual state.

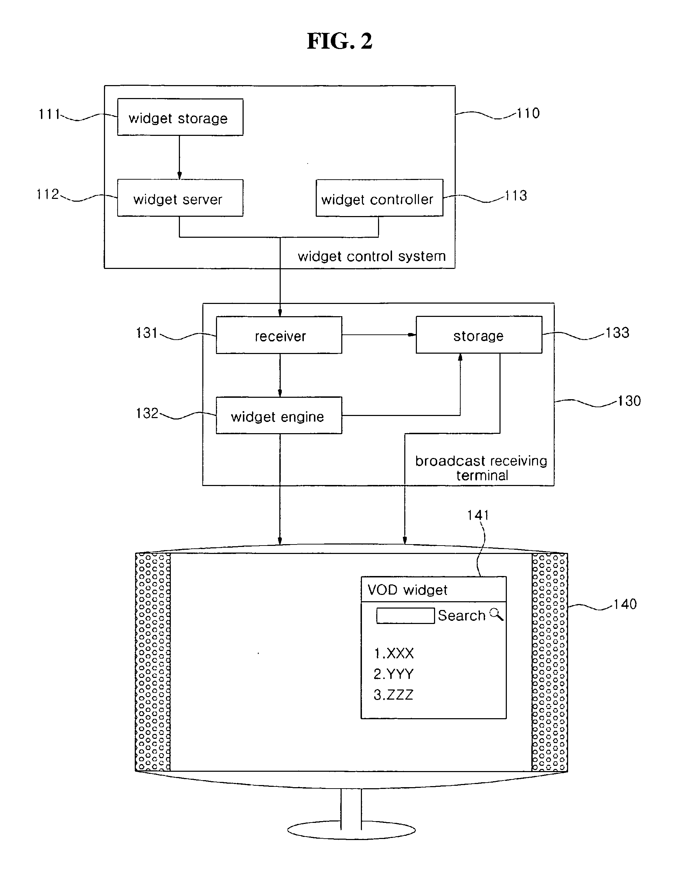

Hereinafter, the operations of the widget control system 110 and the broadcast receiving terminal 130 in accordance with an exemplary embodiment will be described in more detail with reference to Fig. 2.

Fig. 2 is a block diagram showing a detailed structure of the widget control system 110 and the broadcast receiving terminal 130 in accordance with the present embodiment embodiment.

Referring to Fig. 2, the widget control system 110 of the present embodiment may include a widget storage 111; a widget server 112 and a widget controller 113, and the broadcast receiving server 130 may include a receiver 131; a widget engine 132 and a storage 133. For the convenience of description, in Fig. 2, an operator widget is assumed to be a VOD operator widget 141 including a list of VODs that can be provided by the content providing server 120.

First, the functions of the units included in the widget control system 110 will be described below.

The widget storage 111 may store an operator widget received from the content providing server 120. Specifically, the widget storage 111 may store one or more widgets received from at least one content providing server 120.

The widget server 112 may transmit the operator widgets stored in the widget storage 111 to the broadcast receiving terminal 130 through a broadcasting communications network.

At this time, the widget server 112 may automatically transmit (upload) the stored operator widgets to all or at least one (subset) of a plurality of broadcast receiving terminals 130 connected thereto through the broadcast communications network.

Moreover, the widget server 112 may perform the transmission of the operator widgets through the broadcasting communications network by using any one of a unicast, a broadcast and a multicast transmission method, or a carousel transmission method.

Alternatively, in accordance with another embodiment, the operator widgets may be directly stored in the broadcast receiving terminal 130 through a USB storage device or a hard disk drive without using the widget server 112.

The widget controller 113 may transmit to the broadcast receiving terminals 130 through the broadcasting communications network a control signal for controlling the operation of the operator widgets. For example, the widget controller 113 may transmit the control signal by using a default broadcasting mechanism or an explicit control commands.

At this time, the control signal may include at least one of commands of storing, deleting, executing, pausing and stopping an operator widget. The control signal may further include at least one of a first display command for controlling an operator widget executed in the display apparatus 140 be displayed on the display apparatus 140; a second display command for controlling an operator widget executed in the display apparatus 140 not to be displayed on the display apparatus 140; and a position control command for controlling a position, where the widget executed in the display apparatus 140 is displayed, on the display apparatus 140. In addition, the control signal may further include an identifier having at least one of name, version, and priority of a target operator widget to be controlled. The identifier may be used to detect the target operator widget.

Next, the functions of the units included in the broadcast receiving terminal 130 will be described below.

The receiver 131 may receive at least one operator widget transmitted from the widget server 112 and/or a control signal transmitted from the widget controller 113, and the widget engine 132 may control the operation of the operator widget based on the received control signal. Below described are the functions of the widget engine 132 corresponding to the control commands included in the received control signal.

A) In case that the control signal includes the command of storing the operator widget, the widget engine 132 may check whether or not there exists an operator widget whose name is identical to that of the operator widget transmitted from the widget server 112, from at least one operator widget that is pre-stored in the storage 133.

If there exists no operator widget having the same name, the widget engine 132 may store in the storage 133 the operator widget transmitted from the widget server 112. At this time, the operator widget and its identifier may be mapped to each other to be stored therein.

On the other hand, if there is the operator widget having the same name, the widget engine 132 may detect the operator widget having the same name and check whether or not the version or the priority of the transmitted operator widget is higher than that of the detected operator widget.

As the result of checking it, if the version or the priority of the transmitted operator widget is higher than that of the detected operator widget, the widget engine 132 may delete the detected operator widget and store the transmitted operator widget. On the contrary, if the version or the priority of the transmitted operator widget is equal to or lower than that of the detected operator widget, the widget engine 132 may delete the transmitted operator widget. In this way, the operator widget stored in the storage 133 may be upgraded (updated).

Meanwhile, in addition to the operator widget, a user widget may be selectively stored in the storage 133 by a user. In case that an operator widget and a user widget are stored together in the storage 133, if the name of the operator widget is identical to that of the user widget, the resource conflict may occur between the operator widget and the user widget.

For that reason, in order to suppress such resource conflict and accord a higher status to the operator widget provided by the broadcast service provider, the broadcast service provider may set up the priority of the operator widget to be higher than that of the user widget. For example, if the control signal includes the command of storing the operator widget and there exists the user operator whose name is identical to that of the operator user, the widget engine 132 may delete the user widget having a relatively lower priority and store in the storage 133 the operator widget having a relatively higher priority.

B) In case that the control signal includes the command of deleting the operator widget, the widget engine 132 may detect from the storage 133 an operator widget having the same name as that of the operator widget relative to the deleting command and delete the detected operator widget.

C) in case that the control signal include the command of executing the operator widget, the widget engine 132 may detect from the storage 133 an operator widget having the same name as that of the operator widget relative to the executing command and execute the detected operator widget.

At this time, immediately after the operator widget is execute, the operator widget may be displayed on the display apparatus 140 (visible state) or invisibly executed without being displayed thereon such that its operation can be monitored in a background state (active state).

In case that the operator widget is visibly displayed while the operator widget is started, if the control signal further includes the position control command for controlling the position where the operator widget is displayed, the widget engine 132 may adjust the position of the displayed operator widget in response to the position control command. On the other hand, if the operator widget is visibly displayed while the operator widget is started, but the control signal includes no position control command, the widget engine 132 may display the operator widget at an initial position (e.g., the center) pre-set by the broadcast service provider. Accordingly, the broadcast service provider may display the operator widget at a desired position on the display apparatus 140.

For example, the operator widget may be displayed at a position where the operator widget is to be integrated with a channel banner by the position control method or the pre-set initial position.

In accordance with the present embodiment, in case that both of the operator widget and the user widget are visibly executed, the widget engine 132 may control the operator widget to be displayed on top of the user widget (such that, if the operator widget and the user widget are overlapped and executed, the operator widget is displayed at the overlapped portion).

In addition, in accordance with the present embodiment, the control signal may include at least one of the first display command for controlling an operator widget executed in the display apparatus 140 be displayed on the display apparatus 140; the second display command for controlling an operator widget executed in the display apparatus 140 not to be displayed on the display apparatus 140; and the position control command for controlling a position, where the widget executed in the display apparatus 140 is displayed, on the display apparatus 140. In this case, the widget engine 132 may control the executed operator widget to be displayed or not to be displayed on the display apparatus 140 or adjust the position of the displayed operator widget on the display apparatus 140.

For example, in case that the control signal includes the first display command, the widget engine 132 may change the operator widget to the visible state.

At this time, if the control signal further includes the position control command, the widget engine 132 may adjust the position of the displayed operator widget in response to the position control command.

For another example, in case that the operator widget is visibly executed, if the control signal includes the second display control command, the widget engine 132 may change the operator widget to the active state.

In this way, the broadcast service provider may assure the execution of the widget in the broadcast receiving terminal 130 by controlling not only the execution of the widget but also whether or not the widget is visibly executed and the position of the visibly executed widget through the widget control system 110.

D) In case that the control signal include the command of pausing or stopping the widget, the widget engine 132 may detect from the storage 133 an operator widget having the same name as that of the operator widget relative to the pausing or stopping command and pause or stop the detected operator widget.

As described in the above, by controlling the life cycle (storage, execution, pause and deletion) of the widget through the widget control system 110, the broadcast service provider may assure the storage and the execution of the widget in the broadcast receiving 130 and, thus, it is possible to provide various advertisement services or the like by using the widget.

Further, as described earlier, the pause and stop of the operator widget and the operation of changing the visual state of the operator widget may be controlled by a control signal inputted from a user through a user interface such as a remote control.

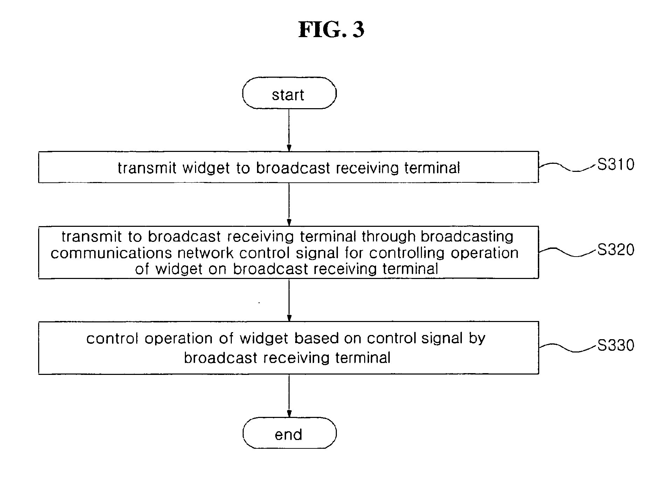

Fig. 3 is a flowchart showing a general process of a widget control method in accordance with an exemplary embodiment. Hereinafter, the operation performed per step will be described.

First, at step S310, a widget for guiding contents provided from the content provider may be transmitted to the broadcast receiving terminal and displayed on the broadcast receiving terminal. At step S320, a control signal for controlling the operation of the widget on the broadcast receiving terminal may be transmitted to the broadcast receiving terminal through the broadcasting communications network.

At this time, the transmission of the widget and the control signal may be performed by the aforementioned widget control system.

Moreover, the control signal includes at least one of commands of storing, deleting, executing, pausing and stopping the widget.

Finally, at step S330, the operation of the widget may be controlled based on the control signal received by the broadcast receiving terminal.

For example, it is assumed that the control signal includes the command of storing the widget. Then, at step S330, in case that there exists no pre-stored widget whose name is identical to that of the target widget relative to the storing command, the transmitted operator widget may be stored. On the contrary, in case that there is a pre-stored widget having the same name, only if the version or the priority of the transmitted operator widget is higher than that of the widget having the same name, the transmitted operator widget may be stored (at this time, the pre-stored widget may be deleted).

In addition, if the control signal includes the command of deleting the widget, the target widget relative to the deleting command may be deleted at step S330.

Further, if the control signal includes the command of executing the widget, the widget whose name is identical to that of the operator widget relative to the executing command may be executed at step S330. At this time, a position where the operator widget is visually executed may be determined depending on a position control command included in the control signal or a value pre-set by the broadcast service provided.

Besides, if the control signal includes the command of pausing or stopping the widget, the target widget relative to the pausing or stopping command may be paused or stopped at step S330.

Hitherto, the widget control method in accordance with the exemplary embodiments has been described. The structure of the widget control system described in the above with reference to Figs. 1 to 3 may be applied to the widget control method of the present embodiments and, thus, corresponding detailed description will be omitted.

In accordance with the above embodiments, the widget that is operated in the broadcast receiving terminal may be controlled by the broadcast service provider.

The limited embodiments and drawings are only examples of the present invention, serve only for helping the present invention to be understood more generally and by no means limit or restrict the scope of the present invention. Thus, any person of ordinary skill in the art shall understand that a large number of permutations and other equivalent embodiments are possible.

## Claims

1. A widget control system (110) comprising:
a widget server (112) configured to transmit to a broadcast receiving terminal (130) through a broadcasting communications network a widget for displaying contents provided from a content provider (120) and/or information related to the contents; and
a widget controller (113) configured to transmit to the broadcast receiving terminal (130) through the broadcasting communication network a control signal for controlling a life cycle of the widget on the broadcast receiving terminal (130),
wherein the control signal comprises commands of storing, deleting, executing, pausing and stopping the widget.

2. The widget control system (110) of claim 1, wherein the control signal further comprises any one of
a first display command for controlling the widget to be displayed on a display apparatus (140) connected to the broadcast receiving terminal (130); and
a second display command for controlling a widget not to be displayed on the display apparatus (140).

3. The widget control system (110) of claim 1, wherein the control signal further comprises a position control command for controlling a position where the widget is displayed on a display apparatus (140), the display apparatus (140) being connected to the broadcast receiving terminal (130).

4. The widget control system (110) of claim 1, the control signal further comprises an identifier including at least one of a name, a version and a priority of the widget.

5. The widget control system (110) of claim 4, wherein, in case that the control signal comprises the command of storing the widget, and
the broadcast receiving terminal (130) detects a widget whose name is identical to that of the transmitted widget from at least one widget pre-stored in the broadcast receiving terminal (130) and deletes the detected widget and store the transmitted widget if a version or a priority of the transmitted widget is higher than that of the detected
widget.

6. The widget control system (110) of claim 1, wherein a widget storage configured to receive the widget from the content provider (120) and store the received widget.

7. A broadcast receiving terminal (130) comprising:
a receiver (131) configured to receive from a broadcast service provider through a broadcasting communications network a widget for displaying contents provided from a content provider (120) and/or information related to the contents and a control signal for controlling a life cycle of the widget; and
a widget engine (132) configured to control the operation of the widget based on the received control signal,
wherein the control signal comprises commands of storing, deleting, executing, pausing and stopping the widget.

8. The broadcast receiving terminal (130) of claim 7, wherein the control signal further comprises any one of
a first display command for controlling the widget to be displayed on a display apparatus (140) connected to the broadcast receiving terminal (130); and
a second display command for controlling a widget not to be displayed on the display apparatus (140).

9. The broadcast receiving terminal (130) of claim 7, wherein the control signal further comprises a position control command for controlling a position where the widget is displayed on a display apparatus (140), the display apparatus (140) being connected to the broadcast receiving terminal (130).

10. A widget control method comprising:
transmitting (310) to a broadcast receiving terminal (130) through a broadcasting communications network a widget for displaying contents provided from a content provider (120) and/or information related to the contents, the widget being displayable on the broadcast receiving terminal (130);
transmitting (320) to the broadcast receiving terminal through the broadcasting communications network a control signal for controlling a life cycle of the widget on the broadcast receiving terminal (130); and
controlling (330) the operation of the widget on the broadcast receiving terminal (130) based on the control signal received,
wherein the control signal comprises commands of storing, deleting, executing, pausing and stopping the widget.

## Patentansprüche

1. Widget-Steuersystem (110), umfassend:
einen Widget-Server (112), der dazu eingerichtet ist, zu einem Rundsende-Empfangsendgerät (130) durch ein Rundsende-Kommunikationsnetzwerk ein Widget zum Anzeigen von Inhalten, die von einem Inhaltsanbieter (120) angeboten werden, und/oder Informationen zu senden, die sich auf die Inhalte beziehen; und
eine Widget-Steuereinheit (113), die dazu eingerichtet ist, zu dem Rundsende-Empfangsendgerät durch das Rundsende-Kommunikationsnetzwerk ein Steuersignal zum Steuern einer Lebensdauer des Widgets an dem Rundsende-Empfangsendgerät (130) zu senden,
wobei das Steuersignal Befehle des Speicherns, Löschens, Ausführens, Pausierens und Stoppens des Widgets umfasst.

2. Widget-Steuersystem (110) nach Anspruch 1, bei dem das Steuersignal weiterhin umfasst:
einen ersten Anzeigebefehl zum Steuern des Widgets, das auf der Anzeigevorrichtung (140) angezeigt werden soll, die mit dem Rundsende-Empfangsendgerät (130) verbunden ist; und
einen zweiten Anzeigebefehl zum Steuern eines Widgets, das nicht auf der Anzeigevorrichtung (140) angezeigt werden soll.

3. Widget-Steuersystem (110) nach Anspruch 1, bei dem das Steuersignal weiterhin einen Positionssteuerbefehl zum Steuern einer Position umfasst, an der das Widget auf der Anzeigevorrichtung (140) angezeigt wird, wobei die Anzeigevorrichtung (140) mit dem Rundsende-Empfangsendgerät (130) verbunden ist.

4. Widget-Steuersystem (110) nach Anspruch 1, bei dem das Steuersignal weiterhin ein Kennzeichen umfasst, das einen Namen und/oder eine Version und/oder eine Priorität des Widgets umfasst.

5. Widget-Steuersystem (110) nach Anspruch 4, bei dem für den Fall, dass das Steuersignal den Befehl des Speicherns des Widgets enthält, das Rundsende-Empfangsendgerät (130) ein Widget, dessen Name identisch mit jenem des gesendeten Widgets ist, aus wenigstens einem Widget erfasst, das in dem Rundsende-Empfangsendgerät (130) zuvor gespeichert wurde, das erfasste Widget löscht und das gesendete Widget speichert, sofern eine Version oder eine Priorität des gesendeten Widgets höher ist als jene des erfassten Widgets.

6. Widget-Steuersystem (110) nach Anspruch 1, bei dem ein Widget-Speicher dazu eingerichtet ist, das Widget von dem Inhaltsanbieter (120) zu empfangen und das empfangene Widget zu speichern.

7. Rundsende-Empfangsendgerät (130), umfassend:
einen Empfänger (131), der dazu eingerichtet ist, von einem Rundsende-Diensteanbieter durch ein Rundsende-Kommunikationsnetzwerk ein Widget zum Anzeigen von Inhalten, die von einem Inhaltsanbieter (120) bereitgestellt werden, und/oder Informationen, die sich auf den Inhalt beziehen, und ein Steuersignal zum Steuern der Lebensdauer des Widgets zu empfangen; und
eine Widget-Maschine (132), die dazu eingerichtet ist, den Betrieb des Widgets auf der Basis des empfangenen Steuersignals zu steuern,
wobei das Steuersignal Befehle zum Speichern, Löschen, Ausführen, Pausieren und Stoppen des Widgets umfasst.

8. Rundsende-Empfangsendgerät (130) nach Anspruch 7, bei dem das Steuersignal weiterhin umfasst:
einen ersten Anzeigebefehl zum Steuern des Widgets, das auf der Anzeigevorrichtung (140) angezeigt werden soll, die mit dem Rundsende-Empfangsendgerät (130) verbunden ist; und
einen zweiten Anzeigebefehl zum Steuern eines Widgets, das nicht auf der Anzeigevorrichtung (140) angezeigt werden soll.

9. Rundsende-Empfangsendgerät (130) nach Anspruch 7, bei dem das Steuersignal weiterhin einen Positionssteuerbefehl zum Steuern einer Position umfasst, an der das Widget auf der Anzeigevorrichtung (140) angezeigt wird, wobei die Anzeigevorrichtung (140) mit dem Rundsende-Empfangsendgerät (130) verbunden ist.

10. Widget-Steuerverfahren, umfassend:
Senden (310) zu einem Rundsende-Empfangsendgerät (130) durch ein Rundsende-Kommunikationsnetzwerk eines Widgets zum Anzeigen von Inhalten, die von einem Inhaltsanbieter (120) bereitgestellt werden, und/oder von Informationen, die sich auf die Inhalte beziehen, wobei das Widget auf dem Rundsende-Empfangsendgerät (130) angezeigt werden kann;
Senden (320) zu dem Rundsende-Empfangsgerät durch das Rundsende-Kommunikationsnetzwerk eines Steuersignals zum Steuern einer Lebensdauer des Widgets auf dem Rundsende-Empfangsendgerät (130); und
Steuern (330) des Betriebs des Widgets auf dem Rundsende-Empfangsendgerät (130) auf der Basis des empfangenen Steuersignals,
wobei das Steuersignal Befehle des Speicherns, Löschens, Ausführens, Pausierens und Stoppens des Widgets enthält.

## Revendications

1. Système de commande d'utilitaire (« widget ») (110) comprenant :
un serveur d'utilitaire (112) configuré pour transmettre à un terminal de réception de télédiffusion (130) par l'intermédiaire d'un réseau de communication de télédiffusion un utilitaire destiné à afficher des contenus fournis en provenance d'un fournisseur de contenus (120) et/ou de l'information relative aux contenus ; et
une unité de commande d'utilitaire (113) configurée pour transmettre au terminal de réception de télédiffusion (130) par l'intermédiaire du réseau de communication de télédiffusion un signal de commande destiné à commander le cycle de vie de l'utilitaire sur le terminal de réception de télédiffusion (130),
dans lequel le signal de commande comprend des instructions de stockage, d'effacement, d'exécution, de mise en pause et d'arrêt de l'utilitaire.

2. Système de commande d'utilitaire (110) selon la revendication 1, dans lequel le signal de commande comprend en outre l'un quelconque des suivants
une première instruction d'affichage destinée à commander l'utilitaire qui doit être affiché sur un appareil d'affichage (140) connecté au terminal de réception de télédiffusion (130) ; et
une seconde instruction d'affichage destinée à commander un utilitaire qui ne doit pas être affiché sur l'appareil d'affichage (140).

3. Système de commande d'utilitaire (110) selon la revendication 1, dans lequel le signal de commande comprend en outre une instruction de commande de position destinée à commander une position où l'utilitaire est affiché sur un appareil d'affichage (140), l'appareil d'affichage (140) étant connecté au terminal de réception de télédiffusion (130).

4. Système de commande d'utilitaire (110) selon la revendication 1, le signal de commande comprenant en outre un identifiant qui comprend au moins l'un des suivants : un nom, une version et une priorité de l'utilitaire.

5. Système de commande d'utilitaire (110) selon la revendication 4, qui, dans le cas où le signal de commande comporte l'instruction de stocker l'utilitaire, et
le terminal de réception de télédiffusion (130) détecte un utilitaire dont le nom est identique à celui de l'utilitaire transmis parmi au moins un utilitaire préalablement stocké dans le terminal de réception de télédiffusion (130), efface l'utilitaire détecté et stocke l'utilitaire transmis si une version ou une priorité de l'utilitaire transmis est supérieure à celle de l'utilitaire détecté.

6. Système de commande d'utilitaire (110) selon la revendication 1, dans lequel un stockage d'utilitaire est configuré pour recevoir l'utilitaire du fournisseur de contenus (120) et stocker l'utilitaire reçu.

7. Terminal de réception de télédiffusion (130), comprenant :
un récepteur (131) configuré pour recevoir d'un fournisseur de service de télédiffusion par l'intermédiaire d'un réseau de communication de télédiffusion un utilitaire destiné à afficher des contenus fournis en provenance d'un fournisseur de contenus (120) et/ou de l'information relative aux contenus ainsi qu'un signal de commande destiné à commander le cycle de vie de l'utilitaire ; et
un moteur d'utilitaire (132) configuré pour commander le fonctionnement de l'utilitaire sur la base du signal de commande reçu,
dans lequel le signal de commande comprend des instructions de stockage, d'effacement, d'exécution, de mise en pause et d'arrêt de l'utilitaire

8. Terminal de réception de télédiffusion (130) selon la revendication 7, dans lequel le signal de commande comprend en outre l'un quelconque des suivants
une première instruction d'affichage destinée à commander l'utilitaire à afficher sur un appareil d'affichage (140) connecté au terminal de réception de télédiffusion (130) ; et
une seconde instruction d'affichage destinée à commander un utilitaire qui ne doit pas être affiché sur l'appareil d'affichage (140).

9. Terminal de réception de télédiffusion (130) selon la revendication 7, dans lequel le signal de commande comprend en outre une instruction de commande de position destinée à commander une position où l'utilitaire est affiché sur un appareil d'affichage (40), l'appareil d'affichage (140) étant connecté au terminal de réception de télédiffusion (130)

10. Procédé de commande d'utilitaire comprenant les phases consistant à :
transmettre (310) à un terminal de réception de télédiffusion (130) par l'intermédiaire d'un réseau de communication de télédiffusion un utilitaire destiné à afficher des contenus fournis en provenance d'un fournisseur de contenus (120) et/ou de l'information relative aux contenus, l'utilitaire pouvant être affiché sur le terminal de réception de télédiffusion (130) ;
transmettre (320) au terminal de réception de télédiffusion par l'intermédiaire du réseau de communication de télédiffusion un signal de commande destiné à commander le cycle de vie de l'utilitaire sur le terminal de réception de télédiffusion (130) ; et
commander (330) le fonctionnement de l'utilitaire sur le terminal de réception de de télédiffusion (130) sur la base du signal de commande reçu ;
le signal de commande comprenant des instructions de stockage, d'effacement, d'exécution, de mise en pause et d'arrêt de l'utilitaire.
